# EUROPEAN PATENT SPECIFICATION

(11) **EP 2 311 692 B1**
(45) Date of publication and mention of the grant of the patent: **24.10.2012**
(21) Application number: 09252424.8
(22) Date of filing: 15.10.2009
(51) Int. Cl.: B60R 21/235

(54) **Improvements in or relating to airbags**
Verbesserungen in oder bezüglich der Gassäcke
Améliorations de ou concernant les sacs gonflables

(43) Date of publication of application: 20.04.2011
(73) Proprietor: Autoliv Development AB, 447 83 Vårgårda (SE)
(72) Inventor: Hirsch, Britta, Macclesfield Cheshire SK11 8AH (GB)
(74) Representative: Parry, Simon James

(56) References cited:
- EP-A- 1 967 422
- WO-A-01/26495
- DE-A1-102005 055 135
- FR-A- 2 767 763
- JP-A- 4 356 249

## Description

The present invention relates to airbags, and more particularly relates to inflatable airbags suitable for use as safety devices in motor vehicles. The invention also relates to methods of producing such airbags.

It is widely known to provide inflatable airbags within motor vehicles for inflation in the event of the motor vehicle being involved in a crash, thereby providing protection for an occupant of the motor vehicle. Such airbags are initially provided in the form of a tightly folded and/or rolled package provided within an airbag module mounted within the motor vehicle. Conventionally, airbags of this general type are manufactured from woven fabric, and typically comprise two or more layers of fabric which are interconnected by seams. However, it has also been proposed to manufacture airbags from thin-film material such as cross-ply laminate material. Materials of this type can offer advantages over more traditional woven fabrics, as they are generally lighter, and have improved levels of impermeability to the gases used to inflate the airbags. Typically, layers of thin-film material are secured to one another to create an airbag via the use of adhesive to create interconnecting seams.

Typically, airbags are manufactured from pieces of fabric or thin-film material which are cut out from a larger piece or roll of fabric or film. If a generally round airbag is to be manufactured, round pieces of fabric or film are cut from the larger piece or roll, and consequently there will inevitably be a lot of the original roll of fabric or film remaining as "scrap". When manufacturing circular airbags, such as airbags intended to be mounted within the steering wheel of a motor vehicle, it is quite common for between 10-20 percent of the original large piece or roll of fabric or film to be subsequently discarded as scrap. From the point of view of minimising the amount of material discarded as scrap, it would therefore be beneficial to manufacture an airbag from polygonal pieces of fabric or thin-film material, such as square or rectangular pieces, thereby enabling the pieces to be cut leaving only a minimum amount of scrap material.

However, if two identical polygonally-shaped pieces of fabric or film are simply superimposed and interconnected around their peripheries so as to form an airbag having a front panel and a rear panel, the resulting airbag, when inflated, is found to be generally "flat", and thus may be termed a "2-dimensional airbag". Ideally, an airbag should have a substantial "depth", and should thus be a so-called "3-dimensional airbag". Whilst it is possible to add extra pieces of fabric or film between a front polygonal panel and a rear polygonal panel in order to provide an appropriate 3-dimensional construction, this can increase the scrap rate, and also increases the complexity of the airbag construction. It has therefore been proposed previously to form airbags from two separate and substantially identical polygonal panels, wherein rather than co-aligning the panels, regions of each panel are instead interdigitated with respective regions of the other panel, with the adjacent peripheral parts of the interdigitated regions being interconnected by a seam. EP1519858A discloses a general arrangement of this type, which is specific to airbags constructed from fabric.

JP04356249 discloses an airbag according to the preamble of claim 1 and claim 6 which has reinforcing tape stuck over abutting edges of the airbag's layers.

EP1967422 discloses an airbag which consists of panels that have been fused together.

It has also been found that so-called 3-dimensional airbags experience a more uniform pressure distribution when inflated, avoiding excessive stress concentration in the regions of the seams which can sometimes be problematic in 2-dimensional airbags.

Whilst a generally similar 3-dimensional construction might be considered beneficial for airbags made from thin-film material, significant problems have been encountered when trying to create a reliable interconnecting seam between the interdigitated regions of the two panels. The somewhat complicated 3-dimensional shape of the seam path makes it difficult to accurately position the respective edges of the panels in order to create a reliable connection between the panels.

It is therefore an object of the present invention to provide an improved inflatable airbag suitable for use as a safety device in a motor vehicle. It is another object of the present invention to provide an improved method of forming an inflatable airbag suitable for use as a safety device in a motor vehicle.

According to a first aspect of the present invention, there is provided an inflatable airbag suitable for use as a safety device in a motor vehicle as defined by the features of claim 1, the airbag being formed from two panels of flexible sheet material, the panels each having a respective peripheral edge and being interconnected by a seam formed between said peripheral edges which comprises a tape bonded to each said panel in the region of said peripheral edges, wherein said seam follows a three-dimensional path, and wherein the material of said two panels is fused together along said peripheral edges.

The sheet material used for the airbag panels may be formed from woven fabric or a suitably flexible plastic film.

Said tape may be provided inside the airbag. Alternatively said tape is provided outside the airbag.

Conveniently, said tape is adhesively bonded to each said panel.

Preferably, said two panels are shaped and oriented with respect to one another such that each adopts a substantially three-dimensional configuration.

According to a second aspect of the present invention, there is provided a method of forming an inflatable airbag suitable for use as a safety device in a motor vehicle from two panels of flexible sheet material as defined by the features of claim 6, each said panel having a peripheral edge, the method involving: forming a seam between said peripheral edges effective to interconnect said panels and being characterised in that the seam follows a three-dimensional path, and by the step of fusing the material of the two panels together along said peripheral edges, and subsequently bonding a tape to each said panel in the region of said peripheral edges such that the tape overlies the region of said fused material.

Preferably, said step of fusing the material of the two panels together comprises the application of ultrasonic energy to the peripheral edges of the panels.

Conveniently, said step of fusing the material of the two panels together is performed with the edge regions of the two panels being superimposed.

Preferably, said step of fusing the material is effective to simultaneously create said peripheral edges.

Advantageously, said bonding step comprises folding the tape along its length to define a recess within which the superimposed edge regions of the panels are received. Alternatively, the edge regions of the two panels may be opened out and the tape applied to both regions simultaneously, in a substantially flat manner.

Preferably, said bonding step involves adhesively bonding the tape to each said panel.

Conveniently, said bonding step involves the application of heat to at least partially cure said adhesive. Alternatively, the bonding step may involve the application of heat to either re-activate the thermoplastic properties of at least one of the panels or the tape.

Advantageously, the interconnected panels are turned inside-out after said bonding step, such that the tape becomes located within the resulting airbag.

In either the first aspect or the second aspect, said flexible sheet material may comprise a cross-ply laminate. Most preferably, the flexible sheet material may comprise polyamide fibres within a polyurethane dispersion. However, it is to be appreciated that in alternative embodiments, the flexible sheet material may take the form of a woven fabric.

In either the first aspect or the second aspect, said tape may comprise a cross-ply laminate, for example comprising polyamide fibres within a polyurethane dispersion.

So that the invention may be more readily understood, and so that further features thereof may be appreciated, embodiments of the invention will now be described by way of example with reference to the accompanying drawings in which:
Figure 1 is a schematic plan view showing a first airbag panel;
Figure 2 is a schematic plan view showing a second airbag panel provided with a gas inlet aperture;
Figure 3 is a plan view showing the second panel superimposed over the first panel;
Figure 4 is a schematic perspective view illustrating the two panels shown in figures 1 to 3 interconnected around their peripheral edges;
Figure 5 is a schematic view illustrating an initial step in the manufacture of the airbag, showing the edge regions of the two panels;
Figure 6 is a view corresponding generally to that of figure 5, illustrating a subsequent step in the manufacture of the airbag;
Figure 7 is a view corresponding generally to that of figure 6, but which illustrates an alternative step to that shown in figure 6;
Figure 8 illustrates a still further step in the manufacture of the airbag;
Figure 9 illustrates an alternative step to that shown in figure 8;
Figure 10 is a close-up perspective view showing a region of the partially completed seam arising from the either of the steps illustrated in figures 6 or 7;
Figure 11 is a perspective view of the entire partially completed airbag, showing the partially completed seam of figure 10;
Figure 12 is a view corresponding generally to that of figure 10, but illustrating a region of the seam arising from either of the steps shown in figures 8 or 9;
Figure 13 illustrates the seam shown in figure 12 as viewed from inside the airbag;
Figure 14 is a view corresponding generally to that of figure 11, but illustrating the completed seam shown in figures 12 and 13;
Figure 15 is a schematic plan view showing a first airbag panel in accordance with an alternative embodiment of the present invention;
Figure 16 is a schematic plan view showing a second airbag panel in accordance with the alternative embodiment;
Figure 17 is a plan view showing the second panel of figure 16 superimposed over the first pane of figure 15; and
Figure 18 is a schematic perspective view illustrating the two panels shown in figures 15 to 17 interconnected around their peripheral edges.

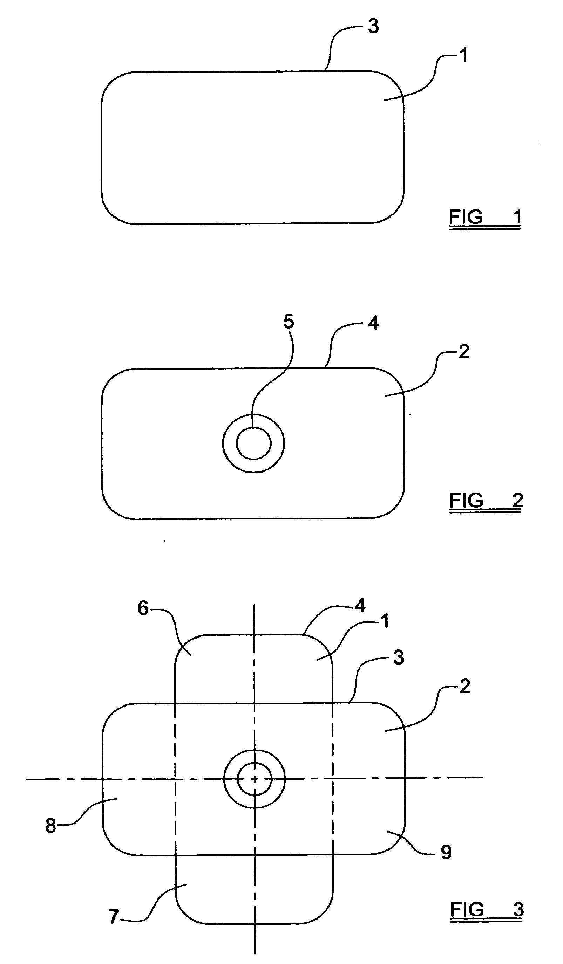

Turning now to consider the drawings in more detail, figure 1 illustrates a first panel 1 and figure 2 illustrates a second panel 2, both of which are used to produce an airbag in accordance with the present invention. Both panels 1, 2 are generally rectangular in form, and have rounded corners. It is important to note that both panels 1, 2 are of the same geometrical shape and have respective peripheral edges 3, 4 of substantially equal length. The second panel 2 illustrated in figure 2 has a generally centrally located gas inlet aperture 5 which is formed through the panel and which is intended to be mounted over part of an airbag inflator such as a gas generator, in a manner known *per se.*

Both of the panels 1, 2 are formed of flexible sheet material, which is preferably provided in the form of a thin-film of polymeric material, and most preferably comprises a web of polyamide fibres held within a matrix of polyurethane dispersion, thereby forming a flexible cross-ply laminate. However, it is to be appreciated that in alternative embodiments, the flexible sheet material may take alternative forms, such as, for example; fabric woven from yarns of suitable polymeric materials, or polymer-coated fabrics.

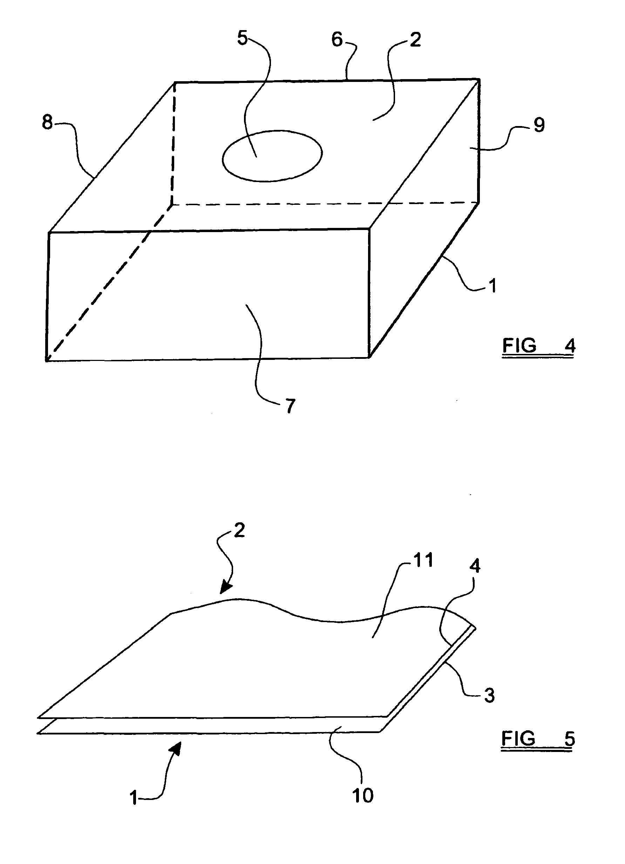

Turning now to consider figure 3, the second panel 2 is shown superimposed on the first panel 1. Also, it will be noted that the two panels are arranged with respect to one another such that their longitudinal axes are substantially orthogonal. The non-overlapping end regions of each panel thus effectively form flaps 6, 7 and 8, 9. In order to form a so-called "3-dimensional airbag", the end flaps 6, 7 of the first panel 1 are folded upwardly towards the second panel, whilst the end flaps 8, 9 of the second panel 2 are folded downwardly towards the first panel. The respective peripheral edges 3, 4 of the two panels are interconnected by way of a seam, as will be described in more detail below, so that the panels form a 3-dimensional airbag of the general configuration illustrated in figure 4. In figure 4, the interconnecting seam is indicated by the bold line and can thus be seen to follow a somewhat tortuous path extending in 3-dimensions. It will also be noted that the panels 1, 2, when connected to one another, each adopt a substantially 3-dimensional configuration.

The particular airbag configuration illustrated schematically in figure 4 is generally suitable for use as a so-called driver airbag of a type intended to be mounted within the steering wheel of a motor vehicle and intended to inflate in an accident situation so as to lie generally between the steering wheel and the driver of the motor vehicle. Accordingly, it will be appreciated that the first panel 1 thus represents the front panel of the airbag and is arranged to face the driver, whilst the second panel 2 effectively represents the rear panel of the airbag.

Turning now to consider figures 5 to 18, the proposed method of forming the airbag of the present invention will be described in more detail, from which further features of the airbag itself will become apparent.

Figure 5 illustrates, in schematic form, the edge regions 10, 11 of the two panels 1, 2; that is the regions of each panel located generally adjacent the respective peripheral edges 3, 4. As will be noted, the edge regions 10, 11 are superimposed and the actual peripheral edges 3, 4 are closely aligned with one another. As will be appreciated, the flexible panels 1, 2 of the airbag will need to be carefully manipulated in order that discrete lengths of their peripheral edges 3, 4 can be aligned and their respective edge regions 10, 11 superimposed successively as progress is made around the entire length of the peripheral edges in order to create the interconnecting seam.

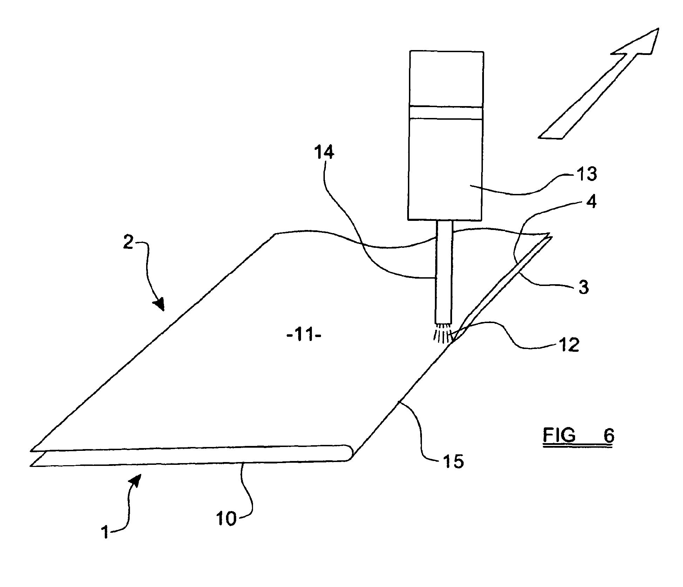

Figure 6 illustrates a subsequent step in the production of the airbag in which a beam of ultrasonic energy (illustrated schematically at 12) is applied to the closely aligned and adjacent peripheral edges 3, 4 of the panels, using an ultrasonic welding tool 13. The head 14 of the tool 13 is located in close proximity to the aligned and adjacent peripheral edges 3, 4 of the two panels and emits the ultrasonic energy in a localised beam directed at the peripheral edges 3, 4. The head 14 is moved progressively along the aligned peripheral edges 3, 4 in the direction indicated by the arrow, such that the ultrasonic energy emitted serves to fuse the material of the two panels together in the form of a localised region 15 running along the peripheral edges of the panels. This process is continued until the entire length of the peripheral edges 3, 4 are fused in this manner.

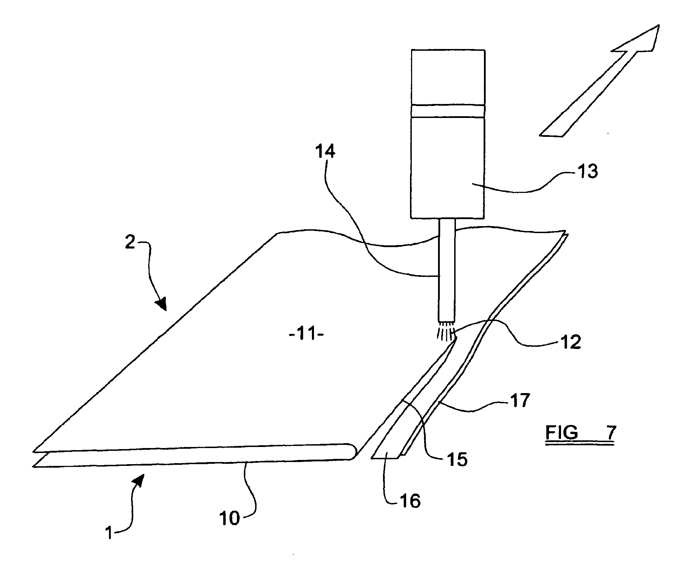

However, it has been found that it can sometimes be difficult to align the peripheral edges of the two panels accurately whilst also manipulating the panels relative to the ultrasonic welding tool 13. Figure 7 thus illustrates an alternative manner in which the peripheral edges of the two panels can be accurately fused together along their lengths as they are cut. This technique involves approximately aligning the edge regions 10, 11 of the two panels relative to one another and then using the ultrasonic energy 12 emitted from the welding tool 13 to cut narrow (approximately 5 mm in width) strips 16, 17 away from the edge regions of the two panels as the tool is moved progressively along the edge regions of the panels, thereby simultaneously cutting the panels and fusing the material of the panels together in the localised region 15.

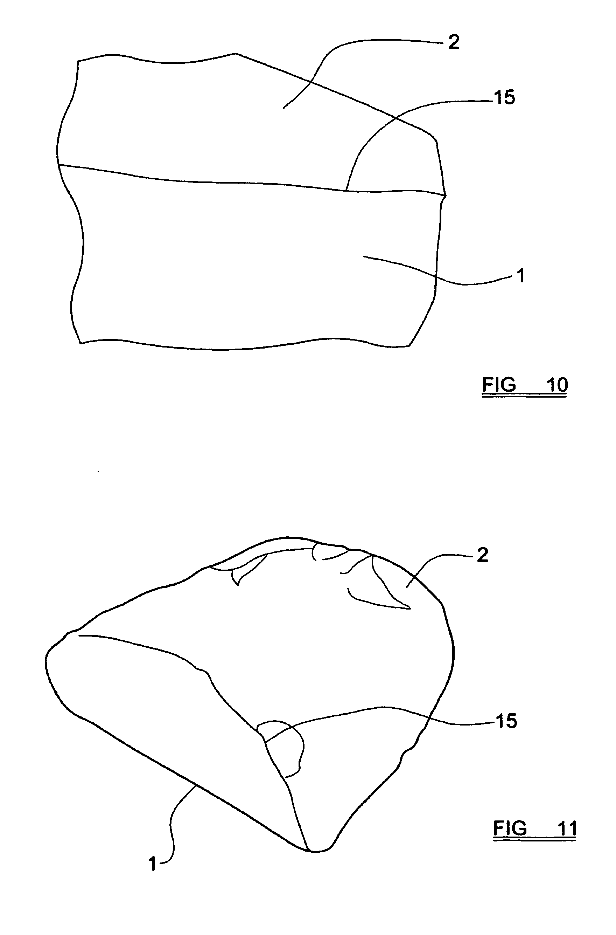

Figure 10 shows the localised region of fused material 15 (created in accordance with either of the techniques illustrated in figures 6 and 7) in further detail, and figure 11 illustrates the complete panels 1, 2 fused together along their peripheral edges in this manner. The localised region of fused material 15 effectively serves as a preliminary bond which is effective to interconnect the panels 1, 2 along their peripheral edges 3, 4 during subsequent manufacturing steps, as will be described in more detail below. It is to be noted that whilst the preliminary bond may not, in itself, be sufficiently strong to resist rupture upon inflation of the airbag, the bond is relatively easily created whilst retaining the peripheral edges 3, 4 of the two panels in close alignment, as is sufficiently strong to remain intact during subsequent stages in the manufacture of the completed airbag.

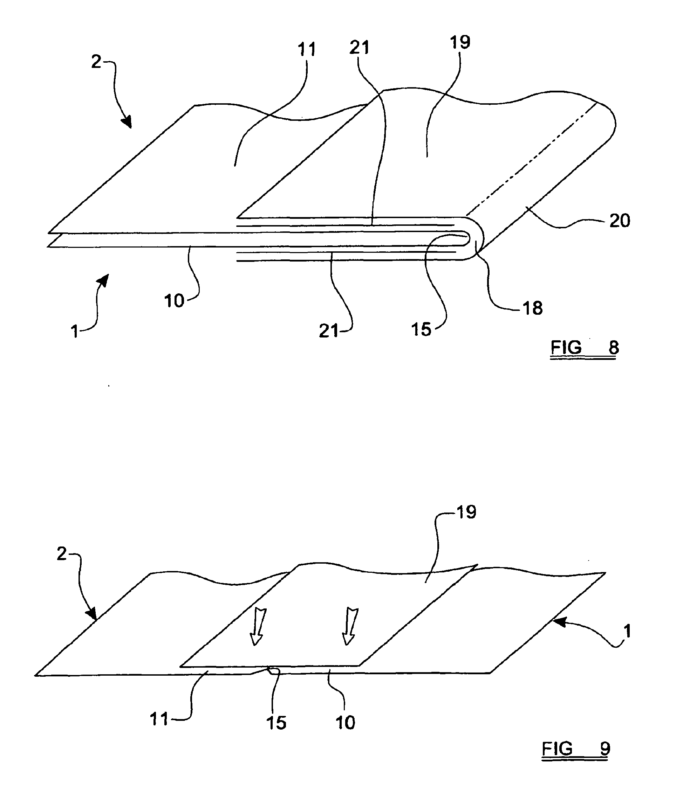

Turning now to consider figure 8, the edge regions 10, 11 of the first and second panels 2 are shown having been inserted into a recess 18 formed by folding a length of elongate tape 19 along its length, so as to create a fold 20. It is envisaged that that tape 19 will comprise similar flexible sheet material to that from which the first and second panels 1, 2 are formed. As will thus be appreciated, in the preferred embodiments, the tape is preferably formed from thin plastic film, and is most preferably comprised as a web of polyamide fibres held within a matrix of polyurethane dispersion, thereby forming a cross-ply laminate.

Strips of adhesive film 21 are shown inserted between the folded over regions of the tape 19 and the respective edge regions 10, 11 of the panels, the adhesive thus being effective to bond the tape 19 to each panel 1, 2 in the region of the fused-together peripheral edges of the panels. However, it is to be noted that the tape 19 may instead be pre-laminated with a suitable adhesive, or may have inherent thermoplastic adhesive properties. More particularly, it will be noted that the fused region 15 is located generally adjacent to the lengthwise fold 20 created in the tape 19, and thus the tape 19 overlies the fused region 15. It is envisaged that heat may be used to at least partially cure the adhesive 21, thereby ensuring a good adhesive bond between the tape 19 and the panels 1, 2.

Figure 9 illustrates an alternative technique for applying the tape 19 over the fused region 15. The panels 1, 2 are opened out from one another and are shown laid flat on a suitable work surface. As can be seen, the tape 19 is then laid flat, over the fused region 15 and the adjacent edge regions 10, 11 of the panels and is then pressed firmly into contact with the edge regions of the panels so as to become bonded thereto. After the tape has been applied flat in this manner, it can easily be folded along its length, i.e. generally along the line of fused material 15, so as to adopt a substantially identical finished configuration to that arising from the application technique shown in figure 8.

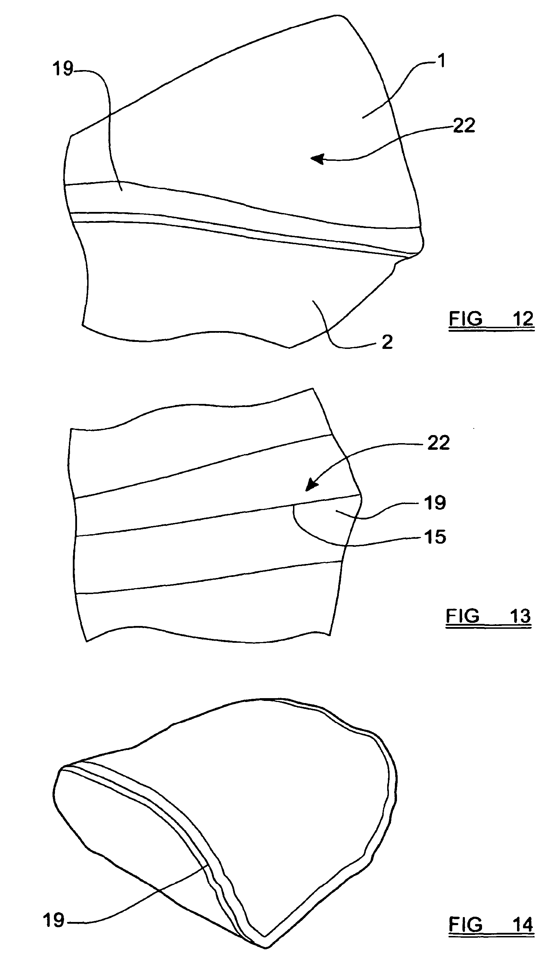

Figure 12 illustrates in more detail the resulting interconnecting seam 22 formed between the two panels 1, 2 in the region of their peripheral edges. The completed seam 22 comprises both the preliminary fused bond 15 (not visible in figure 10) and the secondary taped bond described above. As will be appreciated, the taped bond, being formed in a shear configuration, has a significantly higher strength and hence resistance to rupture than the preliminary bond arising from the fused material 15. However, the initial creation of the fused bond 15 serves to hold the peripheral edges of the two panels together in order to make the application of the tape 19 to the two panels 1, 2 easier.

Figure 13 illustrates the completed seam 22 from inside the airbag, from which it will be seen that the preliminary bond provided by the fused region of material 15 remains intact following application of the tape 19. Figure 14 illustrates the completed airbag, with the tape 19 running substantially the entire length of the interconnected peripheral edges 3, 4 of the two panels.

Whilst figures 12 to 14 show the tape 19 applied on the outside of the completed airbag, it is to be appreciated that in alternative embodiments of the invention, the tape 19 could instead be provided inside the airbag, within the inflatable volume defined by the airbag. For example, it is envisaged that the tape 19 could initially be applied in a generally identical manner to that described above, after which the resulting structure may then be turned inside out, through the gas inlet aperture 5 formed in the second panel 2, in a manner generally known *per se,* such that the tape 19 would then become located inside the airbag.

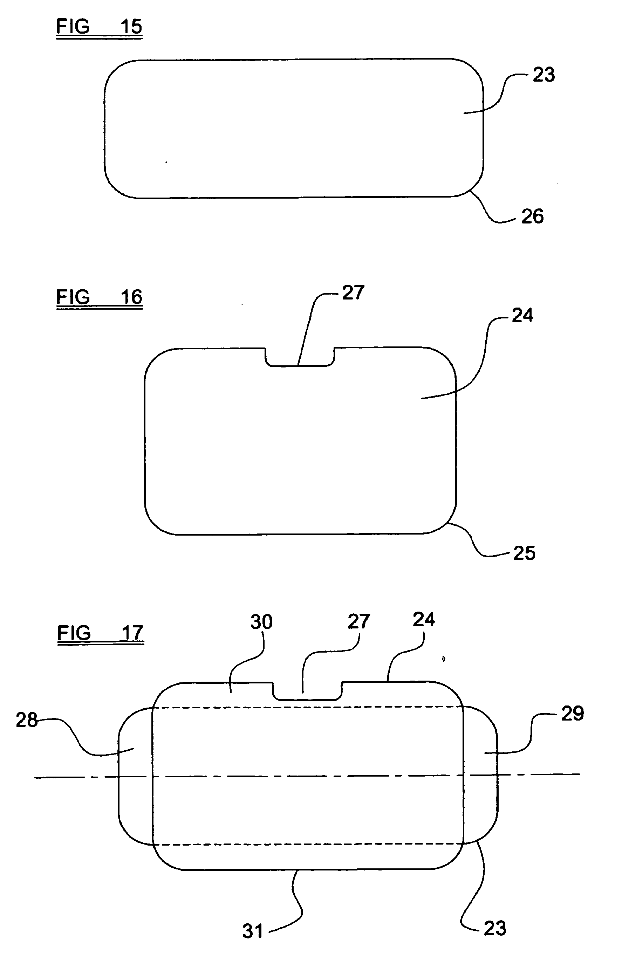

Turning now to consider figures 15 and 16, there are shown alternative configurations of panels from which an airbag in accordance with this invention may be constructed. Figure 15 shows a first panel 23 which is again provided in the form of an elongate rectangle, having curved corner regions. Figure 16 illustrates a second panel 24 which, whilst also generally rectangular in form, has a somewhat lower aspect ratio than the first panel 23, being somewhat shorter and wider than the first panel 23 . Nevertheless, the peripheral side edges 25, 26 of the two panels are still substantially equal in length.

In contrast to the arrangement described above and illustrated in figures 1 to 4, in this embodiment of the airbag, the second panel 24 does not have a centrally formed gas inlet aperture. Instead, one of the two longitudinal side edges of the panel is provided with a cutout recess 27 which, as will be described in more detail below, will serve to define a gas inlet aperture to the resulting airbag, in combination with an adjacent region of the side edge 25 of the first panel 23.

Figure 17 illustrates the second panel 24 superimposed on the first panel 23. As will be noted, in this arrangement the two panels are arranged such that their longitudinal axes are substantially aligned. Nevertheless, due to the different aspect ratios of the two panels, each end of the first panel 23 extends slightly beyond the periphery of the second panel 24, thereby defining a respective end flap 28, 29. Similarly, top and bottom side flaps 30, 31 are defined by regions of the second panel 24 which extend beyond the periphery of the first panel 23. As will be noted, the recess 27 is provided in the edge of the top flap 30.

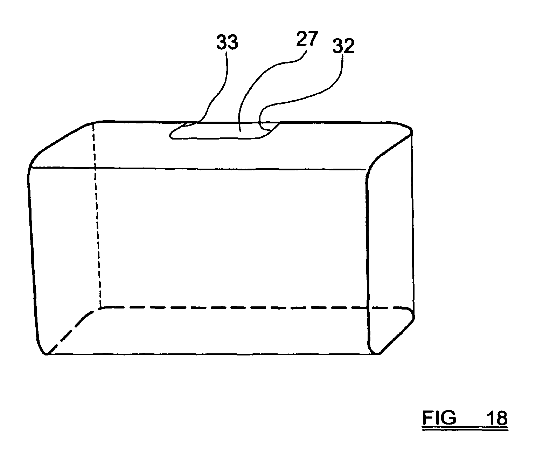

In a similar manner to that illustrated in figure 4, the end flaps 28, 29 of the first panel 23 can be folded generally upwardly and hence towards the periphery of the second panel 24, whilst the side flaps 30, 31 of the second panel 24 can be folded downwardly and hence generally towards the periphery of the first panel 23. The peripheral edges 25, 26 of the two panels are then interconnected in a substantially identical manner to that described above and as illustrated particularly with reference to figures 6 to 14. However, in this arrangement the interconnecting seam begins at a first end 32 of the recess 27, continues substantially all the way around the peripheral edges of the two panels, and terminates at the second end 33 of the recess 27. Accordingly, the recess 27 effectively defines an opening which is intended to serve as a gas inlet aperture for connection to an inflator such as a gas generator or the like. In particular, it is envisaged that this type of construction may be well suited for use as a so-called "inflatable curtain" type airbag. Nevertheless, it will be noted that the resulting airbag still has a generally 3-dimensional configuration and the interconnecting seam, illustrated by the bold line in figure 18 still follows a path extending in 3-dimensions.

Whilst the invention has been described above with reference to particular embodiments, it is to be noted that various modifications could be made, without departing from the scope of the invention. For example, whilst the invention has been described above with particular reference to the tape 19 being adhesively bonded to the edge regions of the two airbag panels, it is envisaged that in variants of the invention, the tape could instead be bonded to the two panels by fusing together the material of the tape and the material of the adjacent region of each panel.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. An inflatable airbag suitable for use as a safety device in a motor vehicle, the airbag being formed from two panels (1, 2) of flexible sheet material, the panels each having a respective peripheral edge (3, 4) and being interconnected by a seam (22) formed between said peripheral edges which comprises a tape (19) bonded to each said panel (1,2) in the region of said peripheral edges (3,4), **characterised in that** said seam (22) follows a three-dimensional path, and the material of said two panels is fused together (15) along said peripheral edges (3, 4).

2. An airbag according to claim 1, wherein said tape (19) is provided inside the airbag.

3. An airbag according to claim 1, wherein said tape (19) is provided outside the airbag.

4. An airbag according to any preceding claim, wherein said tape (19) is adhesively bonded to each said panel (1, 2).

5. An airbag according to any preceding claim, wherein said two panels (1, 2) are shaped and oriented with respect to one another such that each adopts a substantially three-dimensional configuration.

6. A method of forming an inflatable airbag suitable for use as a safety device in a motor vehicle from two panels (1, 2) of flexible sheet material, each said panel having a peripheral edge (3, 4), the method involving: forming a seam (22) between said peripheral edges (3, 4) effective to interconnect said panels and being **characterised in that** the seam follows a three-dimensional path, and by the step of fusing the material of the two panels together along said peripheral edges (3, 4), and subsequently bonding a tape (19) to each said panel in the region of said peripheral edges such that the tape (19) overlies the region (15) of said fused material.

7. A method according to claim 6, wherein said step of fusing the material of the two panels together involves the application of ultrasonic energy to the peripheral edges (3, 4) of the panels (1, 2).

8. A method according to claim 6 or claim 7, wherein said step of fusing the material of the two panels together is performed with the edge regions (10, 11) of the two panels being superimposed.

9. A method according to any one of claims 6 to 8, wherein said step of fusing the material is effective to simultaneously create said peripheral edges (3,4)

10. A method according to any one of claims 6 to 9, wherein said bonding step involves folding the tape (19) along its length to define a recess (18) within which the superimposed edge regions (10, 11) of the panels are received.

11. A method according to any one of claims 6 to 10, wherein said bonding step involves adhesively bonding the tape (19) to each said panel.

12. A method according to claim 11, wherein said bonding step involves the application of heat to at least partially cure said adhesive (21).

13. A method according to any one of claims 6 to 12, wherein the interconnected panels (1, 2) are turned inside-out after said bonding step, such that the tape (19) becomes located within the resulting airbag.

14. An airbag according to any one of claims 1 to 5, or a method according to any one of claim 6 to 12, wherein said flexible sheet material comprises a cross-ply laminate.

15. An airbag according to any one of claims 1 to 5 or 14, or a method according to any one of claims 6 to 13 or 14, wherein said tape (19) comprises a cross-ply laminate.

## Patentansprüche

1. Aufblasbarer Gassack, der sich für die Verwendung als Sicherheitsvorrichtung in einem Kraftfahrzeug eignet, wobei der Gassack aus zwei Platten (1, 2) aus flexiblem flächigem Material geformt ist, wobei die Platten jeweils einen entsprechenden umlaufenden Rand (3, 4) aufweisen und durch eine Naht (22), die zwischen den umlaufenden Rändern gebildet ist, miteinander verbunden sind, die ein Band (19) umfasst, das in dem Bereich der umlaufenden Ränder (3, 4) mit jeder Platte (1, 2) verbunden ist, **dadurch gekennzeichnet, dass** die Naht (22) einen dreidimensionalen Weg nimmt und das Material der zwei Platten entlang den umlaufenden Rändern (3, 4) miteinander verschmolzen (15) ist.

2. Gassack nach Anspruch 1, wobei das Band (19) im Inneren des Gassacks vorgesehen ist.

3. Gassack nach Anspruch 1, wobei das Band (19) außerhalb des Gassacks vorgesehen ist.

4. Gassack nach einem vorhergehenden Anspruch, wobei das Band (19) mit jeder Platte (1, 2) verklebt ist.

5. Gassack nach einem vorhergehenden Anspruch, wobei die beiden Platten (1, 2) derart geformt und zueinander ausgerichtet sind, dass jede eine im Wesentlichen dreidimensionale Gestalt annimmt.

6. Verfahren zum Formen eines aufblasbaren Gassacks, der sich für die Verwendung als Sicherheitsvorrichtung in einem Kraftfahrzeug eignet, aus zwei Platten (1, 2) aus flexiblem flächigem Material, wobei jede Platte einen umlaufenden Rand (3, 4) aufweist, wobei das Verfahren Folgendes umfasst: Formen einer Naht (22) zwischen den umlaufenden Rändern (3, 4), die wirksam die Platten verbindet und **dadurch gekennzeichnet, dass** die Naht einen dreidimensionalen Weg nimmt, und durch den Schritt des miteinander Verschmelzens des Materials der zwei Platten entlang den umlaufenden Rändern (3, 4) und das anschließende Verbinden eines Bands (19) mit jeder Platte in dem Bereich der umlaufenden Ränder, sodass das Band (19) über dem Bereich (15) des verschmolzenen Materials liegt.

7. Verfahren nach Anspruch 6, wobei der Schritt des miteinander Verschmelzens des Materials der beiden Platten das Zuführen von Ultraschallenergie zu den umlaufenden Rändern (3, 4) der Platten (1, 2) umfasst.

8. Verfahren nach Anspruch 6 oder Anspruch 7, wobei der Schritt des miteinander Verschmelzens des Materials der beiden Platten erfolgt, während die Randbereiche (10, 11) der zwei Platten übereinandergelegt sind.

9. Verfahren nach einem der Ansprüche 6 bis 8, wobei der Schritt des Verschmelzens des Materials wirksam gleichzeitig die umlaufenden Ränder (3, 4) erzeugt.

10. Verfahren nach einem der Ansprüche 6 bis 9, wobei der Verbindungsschritt das Zusammenlegen des Bands (19) entlang seiner Länge umfasst, um eine Vertiefung (18) zu definieren, innerhalb der die übereinandergelegten Randbereiche (10, 11) der Platten aufgenommen werden.

11. Verfahren nach einem der Ansprüche 6 bis 10, wobei der Verbindungsschritt das Verkleben des Bands (19) mit jeder Platte umfasst.

12. Verfahren nach Anspruch 11, wobei der Verbindungsschritt das Anwenden von Wärme umfasst, um zumindest teilweise den Klebstoff (21) auszuhärten.

13. Verfahren nach einem der Ansprüche 6 bis 12, wobei die miteinander verbundenen Platten (1, 2) nach dem Verbindungsschritt nach außen gedreht werden, sodass das Band (19) in dem sich ergebenden Gassack angeordnet ist.

14. Gassack nach einem der Ansprüche 1 bis 5 oder Verfahren nach einem der Ansprüche 6 bis 12, wobei das flexible flächige Material einen kreuzweise gelegten Schichtstoff umfasst.

15. Gassack nach einem der Ansprüche 1 bis 5 oder 14 oder Verfahren nach einem der Ansprüche 6 bis 13 oder 14, wobei das Band (19) einen kreuzweise gelegten Schichtstoff umfasst.

## Revendications

1. Sac gonflable approprié pour l'utilisation en tant que dispositif de sécurité dans un véhicule automobile, le sac gonflable étant formé à partir de deux panneaux (1, 2) en matériau flexible en feuilles, les panneaux présentant chacun un bord périphérique respectif (3, 4) et étant interconnectés par une couture (22) formée entre lesdits bords périphériques, qui comprend une bande (19) liée à chaque dit panneau (1, 2) dans la zone desdits bords périphériques (3, 4), **caractérisé en ce que** ladite couture (22) suit un chemin tridimensionnel, et **en ce que** le matériau desdits deux panneaux est fondu ensemble (15) le long desdits bords périphériques (3, 4).

2. Sac gonflable selon la revendication 1, dans lequel ladite bande (19) est prévue à l'intérieur du sac gonflable.

3. Sac gonflable selon la revendication 1, dans lequel ladite bande (19) est prévue à l'extérieur du sac gonflable.

4. Sac gonflable selon une quelconque revendication précédente, dans lequel ladite bande (19) est collée sur chaque dit panneau (1, 2).

5. Sac gonflable selon une quelconque revendication précédente, dans lequel lesdits deux panneaux (1, 2) sont formés et orientés l'un par rapport à l'autre de sorte que chacun adopte une configuration essentiellement tridimensionnelle.

6. Procédé pour former un sac gonflable approprié pour l'utilisation en tant que dispositif de sécurité dans un véhicule automobile à partir de deux panneaux (1, 2) en matériau flexible en feuilles, chaque dit panneau présentant un bord périphérique (3, 4), le procédé impliquant : la formation d'une couture (22) entre lesdits bords périphériques (3, 4) efficace pour interconnecter lesdits panneaux et étant **caractérisé en ce que** la couture suit un chemin tridimensionnel, et par l'étape consistant à fondre le matériau des deux panneaux ensemble le long desdits bords périphériques (3, 4) et ensuite par la liaison d'une bande (19) à chaque dit panneau dans la zone desdits bords périphériques de sorte que la bande (19) recouvre la zone (15) dudit matériau fondu.

7. Procédé selon la revendication 6, dans lequel ladite étape consistant à fondre le matériau des deux panneaux ensemble implique l'application d'énergie ultrasonore sur les bords périphériques (3, 4) des panneaux (1, 2).

8. Procédé selon la revendication 6 ou la revendication 7, dans lequel ladite étape consistant à fondre le matériau des deux panneaux ensemble est effectuée avec les zones de bord (10, 11) des deux panneaux étant superposées.

9. Procédé selon l'une quelconque des revendications 6 à 8, dans lequel ladite étape consistant à fondre le matériau est efficace pour créer simultanément lesdits bords périphériques (3, 4).

10. Procédé selon l'une quelconque des revendications 6 à 9, dans lequel ladite étape de liaison implique le pliage de la bande (19) le long de sa longueur pour définir un évidement (18) à l'intérieur duquel les zones de bord superposées (10, 11) des panneaux sont reçues.

11. Procédé selon l'une quelconque des revendications 6 à 10, dans lequel ladite étape de liaison implique le collage de la bande (19) sur chaque dit panneau.

12. Procédé selon la revendication 11, dans lequel ladite étape de liaison implique l'application de chaleur pour au moins partiellement durcir ledit adhésif (21).

13. Procédé selon l'une quelconque des revendications 6 à 12, dans lequel les panneaux interconnectés (1, 2) sont tournés sur l'envers après ladite étape de liaison, de sorte que la bande (19) est alors située à l'intérieur du sac gonflable obtenu.

14. Sac gonflable selon l'une quelconque des revendications 1 à 5, ou procédé selon l'une quelconque des revendications 6 à 12, dans lequel ledit matériau flexible en feuilles comprend un stratifié croisé.

15. Sac gonflable selon l'une quelconque des revendications 1 à 5 ou 14, ou procédé selon l'une quelconque des revendications 6 à 13 ou 14, dans lequel ladite bande (19) comprend un stratifié croisé.
